# EUROPEAN PATENT APPLICATION

(11) **EP 4 089 829 A1**
(43) Date of publication of application: **16.11.2022**
(21) Application number: 21784942.1
(22) Date of filing: 06.04.2021
(51) Int. Cl.: H01M 50/572, H01M 50/342, H01M 50/107

(54) **SECONDARY BATTERY AND DEVICE INCLUDING SAME**

(30) Priority: 06.04.2020 KR 20200041436; 05.04.2021 KR 20210044214
(71) Applicant: LG Energy Solution, Ltd., Seoul 07335 (KR)
(72) Inventor: PARK, Jeong Eon, Daejeon 34122 (KR); KIM, Chan Bae, Daejeon 34122 (KR); KIM, Do Gyun, Daejeon 34122 (KR); ROH, Saeweon, Daejeon 34122 (KR)
(74) Representative: Goddar, Heinz J.
(86) International application number: PCT/KR2021/004280
(87) International publication number: WO 2021/206418

(57) **Abstract**

A secondary battery according to an embodiment of the present invention includes: a current interrupt device (CID); a safety vent disposed on the current interrupt device and electrically connected to the current interrupt device; and a CID gasket for surrounding an edge of the current interrupt device, wherein the CID gasket includes reinforcement material, and the reinforcement material includes at least one of glass fiber, carbon fiber, aramid fiber, cellulose, ceramic particles, and a filler.

## Description

### [Technical Field]

This application claims priority to and the benefit of Korean Patent Application No. 10-2020-0041436 filed in the Korean Intellectual Property Office on April 06, 2020, and Korean Patent Application No. 10-2021-0044214 filed in the Korean Intellectual Property Office on April 05, 2021, the entire contents of which are incorporated herein by reference.

The present invention relates to a secondary battery and a device including the same, and in particular, it relates to a secondary battery for improving safety in a high-temperature and high-pressure environment, and a device including the same.

### [Background Art]

Recently, a demand for portable electronic products such as laptop computers, video cameras, mobile phones, and the like is rapidly increasing, and development of electric vehicles, energy storage batteries, robots, and satellites is active, thus many researches on secondary batteries used as a driving power source therefor have been performed.

The electrode assembly installed in a battery case is a generating element that is configured with a stacked structure including a positive electrode, a separation membrane, and a negative electrode and that may be repeatedly charged and discharged, and it is classified into a jelly roll type, a stack type, and a stack/folding type. The jelly roll type is a structure obtained by interposing a separation membrane between long sheet type positive and negative electrodes coated with an active material and then winding it, and the stack type is a structure in which a plurality of positive and negative electrodes with a predetermined size are sequentially stacked while a separation membrane is interposed therebetween, while the stack/folding type is a mixed structure of the jelly roll type and the stack type. Among them, the jelly roll type of electrode assembly has high merits of easy manufacturing and high energy density per unit weight.

The secondary battery is classified into a cylindrical battery in which an electrode assembly is installed in a cylindrical metal can, a square-shaped battery in which an electrode assembly is installed in a square-shaped metal can, and a pouch-type battery in which an electrode assembly is installed in a pouch-type case of an aluminum laminate sheet according to shapes of the battery case. Among them, the cylindrical battery has a merit that it has relatively high capacity and has a stable structure.

The secondary battery includes, for example, a nickel cadmium battery, a nickel hydrogen battery, a nickel zinc battery, and a lithium secondary battery. Among them, compared to the nickel-based secondary battery, the lithium secondary battery scarcely generates a memory effect so it is freely charged and discharged, a self-discharging rate is very low, an operation voltage is high, and an energy density per unit weight is high, which are merits, so it is widely used in the cutting-edge electronic device field.

However, when the lithium secondary battery is exposed to a high temperature environment or when a high current flows within a short time by an overcharge, external short-circuit, nail penetration, or local damage, there is a risk of the battery being heated by generation of IR heat and occurrence of an explosion. That is, when the pressure or temperature of the battery rises, the decomposition reaction of the active material and the many side reactions proceed, thereby rapidly raising the temperature of the battery, which further accelerates the reaction between the electrolyte and the electrode. Eventually, a thermal runaway phenomenon occurs in which the temperature of the battery increases sharply, thereby resulting in ignition of the battery, and the lithium secondary battery explodes due to the internal pressure of the battery.

Therefore, various methods for effectively controlling the lithium secondary battery when it is in abnormal operations such as a high temperature or a high pressure have been in discussion. A method for installing an element outside a cell and a method for using a material inside the cell are used to secure safety, and a safety vent using a change of an internal pressure of the battery corresponds to the former case.

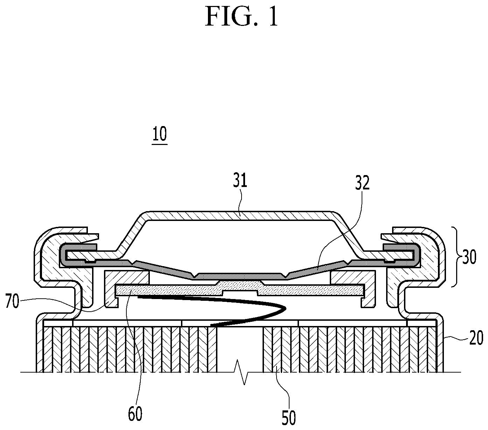

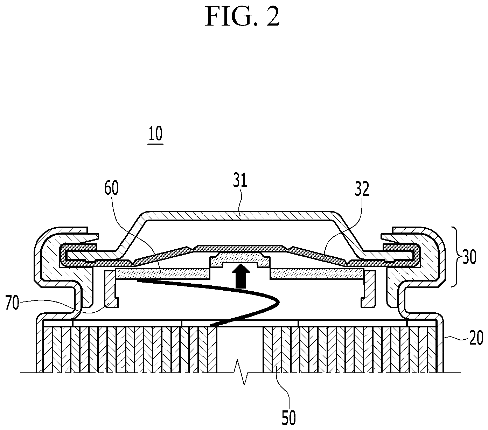

A conventional cylindrical secondary battery including a safety vent will now be described with reference to FIG. 1 and FIG. 2.

FIG. 1 shows a partial cross-sectional view of an upper portion of a conventional cylindrical secondary battery.

Referring to FIG. 1, a jelly roll type of electrode assembly 50 is received into a cylindrical case 20, and a cap assembly 30 is installed to an opened upper portion of the cylindrical case 20 thereby manufacturing a cylindrical secondary battery 10.

The cap assembly 30 includes an upper cap 31 and an safety vent 32 reducing internal pressure, and the upper cap 31 may be closely attached to the internal pressure reducing safety vent 32.

The safety vent 32 may be electrically connected to an electrode assembly 50 through a current interrupt device (CID) 60. An edge of the current interrupt device 60 may be surrounded by a CID gasket 70.

FIG. 2 shows a partial cross-sectional view when an internal pressure of a cylindrical secondary battery of FIG. 1 increases.

Referring to FIG. 2, when the cylindrical secondary battery 10 is exposed to a high temperature or heat is generated therein to increase its internal pressure, a shape of the safety vent 32 is reversed, and the current interrupt device 60 is separated into two portions to interrupt a current. In this instance, the CID gasket 70 may be positioned between the safety vent 32 and the current interrupt device 60 to prevent the safety vent 32 and the current interrupt device 60 separated from each other from conducting to each other.

However, the CID gasket 70 may be melted in a high-temperature and high-pressure environment. In detail, as shown in FIG. 2, part of the CID gasket 70 may be melted, and the current interrupt device 60 ascended by the internal pressure may contact the safety vent 32, so the current may not be interrupted and a reconnection may be generated. As the current is not interrupted, the temperature may continue to increase, which may result in ignition and explosion of the cylindrical secondary battery 10.

Therefore, when a melting is generated in the high-temperature and high-pressure environment, there is a need to develop a CID gasket with a high heat-deflection temperature so as to maintain an insulating characteristic.

### [Detailed description of the invention]

### [Technical Problem]

The present invention has been made in an effort to provide a secondary battery for improving safety in a high temperature and high pressure environment, and a device including the same.

However, the objective of the present invention is not limited to the aforementioned one, and may be extended in various ways within the spirit and scope of the present invention.

### [Technical Solution]

An embodiment of the present invention provides a secondary battery including: a current interrupt device (CID); a safety vent disposed on the current interrupt device and electrically connected to the current interrupt device; and a CID gasket for surrounding an edge of the current interrupt device, wherein the CID gasket includes reinforcement material, and the reinforcement material includes at least one of glass fiber, carbon fiber, aramid fiber, cellulose, ceramic particles, and a filler.

The CID gasket may include a first portion for surrounding an edge of the current interrupt device and a second portion disposed on the first portion and extending in a center direction of the current interrupt device.

The second portion may extend between the safety vent and the current interrupt device.

The CID gasket may include a polymer resin, and the polymer resin may include at least one of polypropylene (PP), polyethylene terephthalate (PET), polybutylene terephthalate (PBT), and perfluoroalkoxy alkane (PFA).

The CID gasket may include a polymer resin, and the polymer resin may include polybutylene terephthalate (PBT).

The current interrupt device may include an exterior circumference portion and an interrupter surrounded by the exterior circumference portion, and when an internal pressure of the secondary battery rises, the interrupter may be separated from the exterior circumference portion.

The safety vent may be electrically connected to the interrupter.

The secondary battery may further include an electrode assembly including a positive electrode, a negative electrode, and a separation membrane, wherein the exterior circumference portion may be electrically connected to the positive electrode through a positive electrode tab.

The secondary battery may further include an upper cap disposed on the safety vent and electrically connected to the safety vent.

The secondary battery may further include a cylindrical case.

### [Advantageous effects]

The CID gasket according to the embodiments of the present invention includes reinforcement material, and as thermal resistance and heat-deflection temperature increase, the insulating characteristic may be maintained when melting is generated in the high-temperature and high-pressure environment. Accordingly, the safety-improved secondary battery may be manufactured.

### [Description of the Drawings]

FIG. 1 shows a partial cross-sectional view of an upper portion of a conventional cylindrical secondary battery.
FIG. 2 shows a partial cross-sectional view when an internal pressure of a cylindrical secondary battery of FIG. 1 increases.
FIG. 3 shows a partial cross-sectional view of an upper portion of a secondary battery according to an embodiment of the present invention.
FIG. 4 shows a partial cross-sectional view when an internal pressure of a secondary battery of FIG. 3 increases.
FIG. 5 to FIG. 8 show graphs on estimation results of external short-circuit according to an embodiment 1, an embodiment 2, a comparative example 1, and a comparative example 2.
FIG. 9 to FIG. 12 show graphs on estimation results of external short-circuit according to an embodiment 3, an embodiment 4, a comparative example 3, and a comparative example 4.
FIG. 13 to FIG. 16 sequentially show photographs of a CT image after a current interrupt device is separated, an upper cap, and a sealing gasket according to an embodiment 3, an embodiment 4, a comparative example 3, and a comparative example 4.
FIG. 17 and FIG. 18 shows graphs on estimation results of external short-circuit according to an embodiment 5 and an embodiment 6.

### [Mode for Invention]

The present invention will be described more fully hereinafter with reference to the accompanying drawings, in which embodiments of the invention are shown. As those skilled in the art would realize, the described embodiments may be modified in various different ways, all without departing from the spirit or scope of the present disclosure.

Parts that are irrelevant to the description will be omitted to clearly describe the present invention, and the same elements will be designated by the same reference numerals throughout the specification.

Parts that are irrelevant to the description are omitted to clearly describe the present disclosure, and like reference numerals designate like elements throughout the specification. In the drawings, the thickness of layers, films, panels, regions, etc., are exaggerated for clarity. For ease of description, the thicknesses of some layers and areas are exaggerated.

It will be understood that when an element such as a layer, film, region, or substrate is referred to as being "on" another element, it can be directly on the other element or intervening elements may also be present. In contrast, when an element is referred to as being "directly on" another element, there are no intervening elements present. Further, in the specification, the word "on" or "above" means disposed on or below the object portion, and does not necessarily mean disposed on the upper side of the object portion based on a gravitational direction.

Unless explicitly described to the contrary, the word "comprise" and variations such as "comprises" or "comprising" will be understood to imply the inclusion of stated elements but not the exclusion of any other elements.

Further, throughout the specification, the phrase "in a plan view" means viewing a target portion from the top, and the phrase "in a cross-sectional view" means viewing a cross-section formed by vertically cutting a target portion from the side.

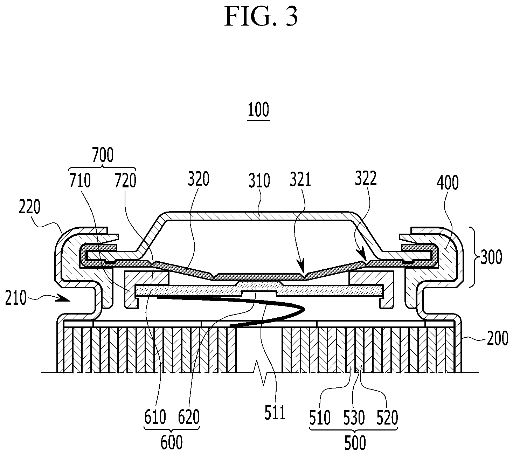

FIG. 3 shows a partial cross-sectional view of an upper portion of a secondary battery according to an embodiment of the present invention.

Referring to FIG. 3, the secondary battery 100 according to an embodiment of the present invention may be manufactured by inserting the electrode assembly 500 into the cylindrical case 200, injecting an electrolyte solution into the same, and mounting a cap assembly 300 on the opened upper portion of the cylindrical case.

The electrode assembly 500 is a jelly roll type of structure in which a separation membrane 530 is provided between a positive electrode 510 and a negative electrode 520 and is wound, and a center pin (not shown) may be inserted into its center. The center pin is generally made of a metal material to give predetermined strength, and it is configured with a hollow cylindrical structure in which a plate is circularly bent. The center pin may fix and support the electrode assembly 500 and may function as a passage for outputting gas generated by an inner reaction at a time of charging and discharging and during operation.

The cap assembly 300 includes an upper cap 310 and a safety vent 320, and the upper cap 310 may be positioned on the safety vent 320 and may form a mutually closely attached structure with the safety vent 320 to be thus electrically connected to each other. The upper cap 310 has a center protruding upward, and it may be electrically connected to the positive electrode 510 of the electrode assembly 500 and may function as a positive electrode terminal for access to an external circuit. In detail, the upper cap 310 may be indirectly connected to the positive electrode 510 through a safety vent 320, a current interrupt device 600, and a positive electrode tab 511.

The cylindrical case 200 may include a beading unit 210 and a crimping unit 220.

The beading unit 210 indicates a portion of the cylindrical case 200 indented in a center direction of the electrode assembly 500, which is to allow stable combination of the cap assembly 300 and prevent movement of the electrode assembly 500.

The crimping unit 220 is positioned on an upper portion of the beading unit 210 to surround the cap assembly 300, which is for stable combination of the cap assembly 300. A sealing gasket 400 is installed inside the crimping unit 220 and the beading unit 210 to increase a sealing force between the cap assembly 300 and the cylindrical case 200. That is, the crimping unit 220 is formed by positioning the sealing gasket 400 between the cylindrical case 200 and the cap assembly 300 and bending an end of the cylindrical case 200. By this, the installation of the cap assembly 300 and the sealing of the secondary battery 100 may be performed.

Although not shown in detail, a negative electrode tab connected to the negative electrode 520 of the electrode assembly 500 may be bonded to the cylindrical case 200. Hence, the cylindrical case 200 may function as a negative electrode terminal for access with an external circuit.

In addition, the current interrupt device (CID) 600 and the CID gasket 700 are positioned below the safety vent 320. This will now be described in detail.

The secondary battery 100 according to the present embodiment includes: a current interrupt device 600, a safety vent 320 positioned on the current interrupt device 600 and electrically connected to the current interrupt device 600, and a CID gasket 700 for surrounding an edge of the current interrupt device 600. The CID gasket 700 may include reinforcement material, and the reinforcement material may include at least one of glass fiber, carbon fiber, aramid fiber, cellulose, ceramic particles, and a filler.

The safety vent 320 is a thin-film structure to which a current flows, and in which two grooves 321 and 322 with different depths are formed.

The current interrupt device 600 is a member of a conductive plate, and may include an exterior circumference portion 610 and an interrupter 620 surrounded by the exterior circumference portion 610. Further, although not shown in detail, a plurality of via holes for discharging gas may be formed. For separation between the exterior circumference portion 610 and the interrupter 620, a boundary between the exterior circumference portion 610 and the interrupter 620 may be designed to have relatively weak strength.

The CID gasket 700 may include a first portion 710 for surrounding an edge of the current interrupt device 600, and a second portion 720 positioned on the first portion 710 and extending in a center direction of the current interrupt device 600. In detail, the second portion 720 may extend between the safety vent 320 and the current interrupt device 600.

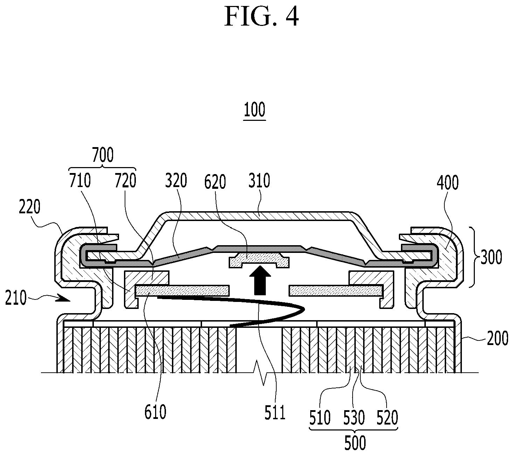

FIG. 4 shows a partial cross-sectional view when an internal pressure of a secondary battery of FIG. 3 increases. In detail, it shows that the safety vent 320 and the current interrupt device 600 interrupt the current when an internal pressure of the secondary battery 100 rises.

Referring to FIG. 3 and FIG. 4, the exterior circumference portion 610 may be electrically connected to the positive electrode 510 of the electrode assembly 500 through the positive electrode tab 511, and the interrupter 620 may be electrically connected to the safety vent 320. There are no limits in this electrical connection method, and they may be connected by welding. When the secondary battery 100 is normally operated, the positive electrode tab 511, the current interrupt device 600, the safety vent 320, and the upper cap 310 are electrically connected to each other, so the secondary battery 100 is connected to an external circuit.

However, when pressurizing gas is applied to the safety vent 320 by the increase of pressure inside the secondary battery 100, the shape of the safety vent 320 is reversed. Accordingly, as shown in FIG. 4, the interrupter 620 is separated from the exterior circumference portion 610, and an electrical connection between the external circuit and the electrode assembly 500 is blocked. According to this, when the secondary battery 100 is exposed to a high temperature or heat is generated therein to increase the internal pressure, explosion or ignition thereof may be prevented.

In this instance, the second portion 720 of the CID gasket 700 extends between the safety vent 320 and the exterior circumference portion 610 to prevent the safety vent 320 from contacting the exterior circumference portion 610. That is, by preventing the safety vent 320 from contacting the exterior circumference portion 610 after the exterior circumference portion 610 is separated from the interrupter 620, a reconnection, that is, a flowing of the current, may be blocked.

As described above, there were some cases in the past that the CID gasket was melted or changed to fail to block the contact of the safety vent 320 and the exterior circumference portion 610.

Differing from this, the CID gasket 700 according to an embodiment of the present invention includes reinforcement material and may increase heat resistance and a heat-deflection temperature. Hence, insulation may be maintained by blocking the contact of the safety vent 320 and the exterior circumference portion 610 in a high-temperature and high-pressure environment. The reinforcement material according to the present embodiment may include at least one of glass fiber, carbon fiber, aramid fiber, cellulose, ceramic particles, and a filler, and particularly, it is preferable to include the glass fiber.

The CID gasket 700 includes a polymer resin, and it may be manufactured by injection molding. The polymer resin may include at least one of polypropylene (PP), polyethylene terephthalate (PET), polybutylene terephthalate (PBT), and perfluoroalkoxy alkane (PFA). Among them, it may include polybutylene terephthalate (PBT).

A super-engineering plastic material such as polyphenylene sulfide (PPS) has great rigidity, so when the corresponding material is included, formability is not good, and when the reinforcement material is added to the corresponding material, a worse influence may be applied to the formability. On the contrary, the material such as polybutylene terephthalate (PBT) or polypropylene (PP) is an elastomer with excellent elasticity, and when the material is included, an injecting property is improved so it is easy to form the CID gasket 700. In other words, in a like way to the present embodiment, when a polymer resin such as polypropylene (PP) or polybutylene terephthalate (PBT) is included, the formability and flexibility of the CID gasket 700 may be obtained, thereby easing the injection molding and increasing the contacting property to the current interrupt device 600.

On the other hand, when the safety vent 320 is operable, the temperature and the pressure inside the secondary battery 100 may be frequently steeply increased according to a decomposition reaction of an active material and a plurality of side reactions, and the CID gasket 700 is directly exposed to the high-temperature and high-pressure gas. The CID gasket 700 needs to have heat resistance while not requiring a sealing property like the sealing gasket 400. The CID gasket 700 according to the present embodiment may include a polymer resin such as polypropylene (PP) or polybutylene terephthalate (PBT) to obtain formability and flexibility, and may simultaneously include reinforcement material such as glass fiber to maintain the insulating characteristic in the high-temperature and high-pressure environment.

According to an embodiment of the present invention, a mass of the reinforcement material vs. a mass of the CID gasket 700 may be equal to or greater than 15% to 50%, and more preferably, 25% to 40%. For example, the CID gasket 700 may include polybutylene terephthalate (PBT) and glass fiber, and the mass of the glass fiber vs. the entire mass of the CID gasket including the PBT and the glass fiber may be equal to or greater than 15% and equal to or less than 50%.

When the mass of the reinforcement material vs. the mass of the CID gasket 700 is less than 15%, the heat resistance and the heat-deflection temperature of the CID gasket 700 may be not increased as much as desired. As a result, the contacting of the safety vent 320 and the exterior circumference portion 610 may not be intercepted and a reconnection may be generated after the current interrupt device 600 is separated. In another way, a plurality of the secondary batteries 100 may configure a battery pack, and in this instance, it may be preferable for the mass of the reinforcement material vs. the mass of the CID gasket 700 to be equal to or greater than 25%. When the mass of the reinforcement material vs. the mass of the CID gasket 700 is less than 25% in the battery pack unit, the CID gasket 700 may fail to endure the heat and the pressure inside the battery pack and may be melted. A reconnection may be generated, which may lead to a thermal runaway or an explosion of the battery pack.

In addition, when the mass of the reinforcement material vs. the mass of the CID gasket 700 is greater than 50%, formability of the CID gasket 700 may be hindered. The CID gasket 700 may be manufactured by adding the reinforcement material to a polymer resin such as PBT and performing injection molding, and when the mass of the reinforcement material is greater than 50%, it may have more rigidity than is needed, and the injection molding may not be properly performed.

The CID gasket according to the present invention will now be described with reference to a detailed embodiment and a comparative example.

### Estimation Example 1: Measurement of heat-deflection temperature

**(Table 1)**

| Heat characteristics | PBT+GF 30% | PBT |
|---|---|---|
| Heat-deflection temperature (°C) at 0.45MPa | 220 | 150 |
| Heat-deflection temperature (°C) at 1.8MPa | 200 | 60 |
| Upper working temperature (°C) | 120-200 | 120 |
| Melting temperature (°C) | 225 | 223 |

Table 1 shows an experimental group and a comparison group of the present invention, comparing heat characteristics of a CID gasket including PBT and glass fiber (GF) and a gasket including PBT. In the case of the CID gasket including PBT and glass fiber, the mass of the glass fiber vs. the mass of the CID gasket is 30%.

Referring to Table 1, it is found that the melting points of the respective materials are similar to each other, but in the case of adding glass fiber, the heat-deflection temperature is substantially increased. Particularly, in the case of the heat-deflection temperature measured at 1.8MPa, values of the respective materials have a big difference. It is found from this that heat resistance of the CID gasket is improved by an addition of glass fiber.

### Estimation Example 2: External short-circuit estimation

Embodiments 1 and 2 and comparative examples 1 and 2 are provided, and an external short-circuit estimation is performed.

In detail, a CID gasket including PBT and glass fiber is applied to a 18650 cylindrical battery to provide embodiments 1 and 2, and a CID gasket including PBT is applied to a 18650 cylindrical battery to provide comparative examples 1 and 2. Regarding the embodiments 1 and 2, the mass of glass fiber vs. the mass of the CID gasket is 30%.

In the case of the external short-circuit estimation, external lines are connected to positive and negative terminals of a cylindrical battery with predetermined resistance, and a conduct of the cylindrical battery is determined.

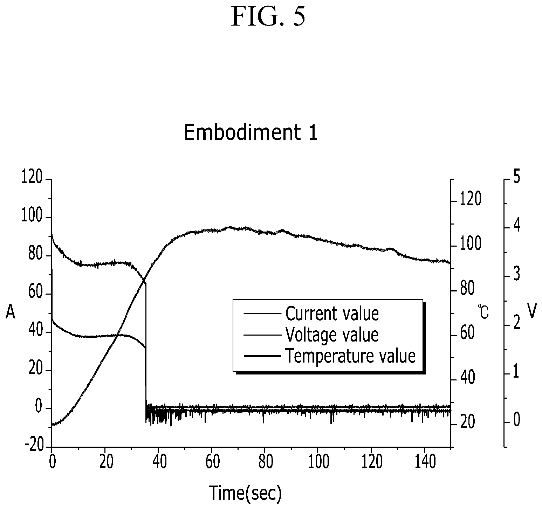

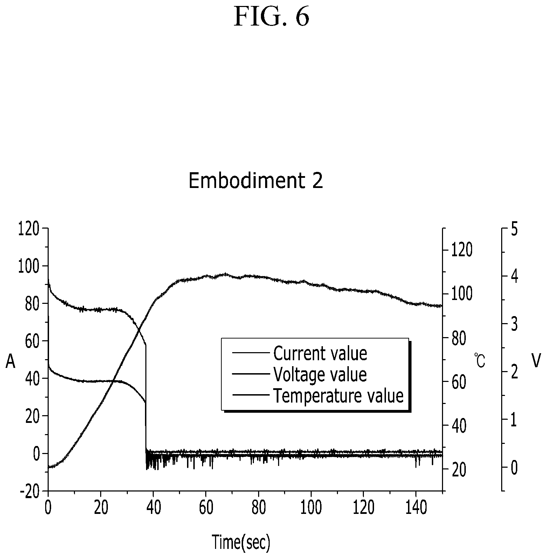

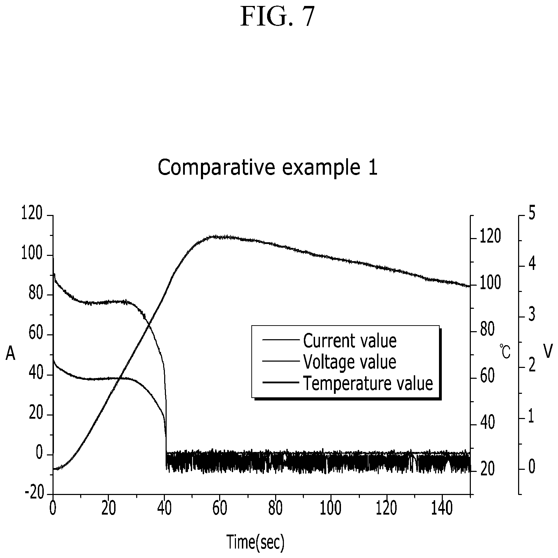

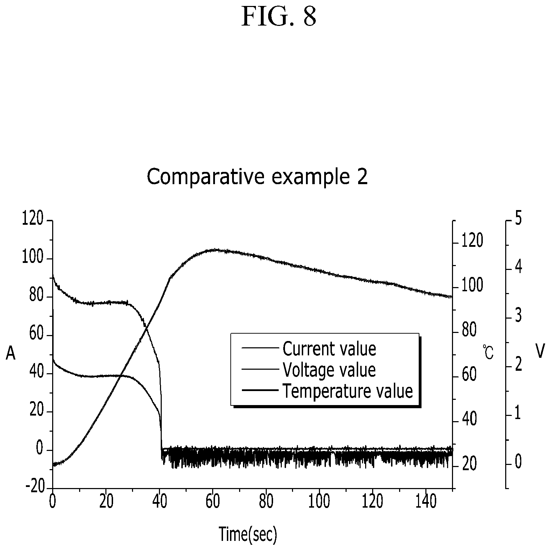

In the estimation example 2, external resistance of 25mΩ is applied to the cylindrical batteries according to embodiments 1 and 2 and comparative examples 1 and 2 to determine conducts of the respective cylindrical batteries. In detail, current values and voltage values of the cylindrical batteries, and temperatures of the CID gasket, are measured with respect to time, and the measured values are expressed in FIG. 5 to FIG. 8 and Table 2. FIG. 5 to FIG. 8 show graphs on estimation results of external short-circuit according to an embodiment 1, an embodiment 2, a comparative example 1, and a comparative example 2. Table 2 is a summary of results of the graphs.

In addition, it is measured whether a reconnection is generated after a separation of the current interrupt device (CID) in the external short-circuit estimation.

**(Table 2)**

| | CID separating time (sec) | Max. temp (°C) | Resistance after CID separation (mΩ) | Notes |
|---|---|---|---|---|
| Embodiment | 35.3 | 109 | ∞ | No reconnection |
| 1 | | | | |
| Embodiment 2 | 37.1 | 109 | ∞ | No reconnection |
| Com parative Example 1 | 40.6 | 120 | ∞ | No reconnection |
| Com parative Example 2 | 40.6 | 117 | ∞ | No reconnection |

Referring to FIG. 5 to FIG. 8 and Table 2, a time for the current value and the voltage value of the cylindrical battery to be steeply reduced and approach to 0 in the graph represents a time for the current interrupt device (CID) to be separated as the internal pressure increases and for the current and the voltage to be intercepted. It is found that the current interrupt device is separated in the middle range of 30 seconds (sec) in the case of the embodiments 1 and 2, and the current interrupt device is separated after 40 seconds (sec) in the case of the comparative examples 1 and 2. Further, the maximum temperature (Max. temp) of the cylindrical battery is measured to be high in the cases of the comparative examples 1 and 2.

To review reasons thereof, it is found that, while the external short-circuit estimation is progressed, the temperature and the pressure inside the cylindrical battery are increased, and hence, the current interrupt device must be separated and opened, and in the case of the comparative example 1 and 2, the CID gasket fails to function as a supporter but is thermally deflected, so a time for separating the current interrupt device is delayed, and the maximum temperature of the cylindrical battery is increased. On the contrary, in the case of the embodiments 1 and 2, it is found that heat resistance of the CID gasket is improved as the glass fiber is added, thereby fluently functioning as a supporter.

Regarding the embodiments 1 and 2 and the comparative examples 1 and 2, the reconnection is not generated after the current interrupt device (CID) is separated.

### Estimation Example 3: External short-circuit estimation

The external short-circuit estimation is performed after the embodiments 3 and 4 and the comparative examples 3 and 4 are provided.

In detail, the embodiments 3 and 4 are provided by applying the CID gasket including PBT and glass fiber to the 21700 cylindrical battery, and the comparative examples 3 and 4 are provided by applying the CID gasket including PBT to the 21700 cylindrical battery. Regarding the embodiments 3 and 4, the mass of the glass fiber vs. the mass of the CID gasket is 30%.

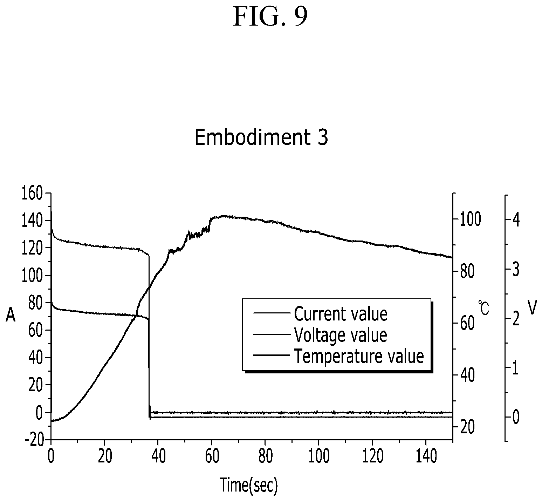

In the estimation example 3, external resistance of 20mΩ is applied to the cylindrical battery according to embodiments 3 and 4 and comparative examples 3 and 4 to thus determine the conducts of the respective cylindrical batteries. Further, it is measured whether a reconnection is generated after the separation of the current interrupt device (CID) in the external short-circuit estimation. Experimental results are shown in FIG. 9 to FIG. 12 and Table 3. FIG. 9 to FIG. 12 show graphs on estimation results of external short-circuit according to an embodiment 3, an embodiment 4, a comparative example 3, and a comparative example 4. Table 3 is a summary of results of the graphs.

**(Table 3)**

| | CID separating time (sec) | Max. temp (°C) | Resistance after CID separation (mΩ) | Notes |
|---|---|---|---|---|
| Embodiment 3 | 40.1 | 101 | ∞ | No reconnection |
| Embodiment 4 | 38.2 | 99 | ∞ | No reconnection |
| Com parative Example 3 | 38.2 | 94.1 | 7.5 | Reconnection generated |
| Com parative Example 4 | 42.2 | 88.7 | 4.9 | Reconnection generated |

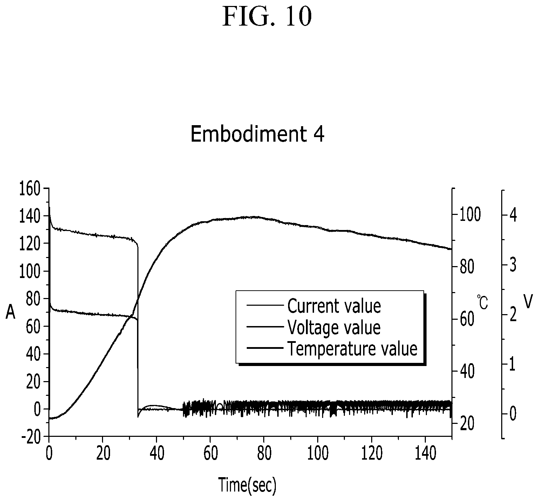

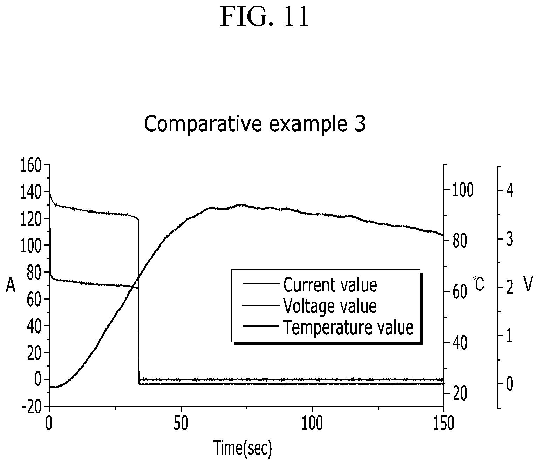

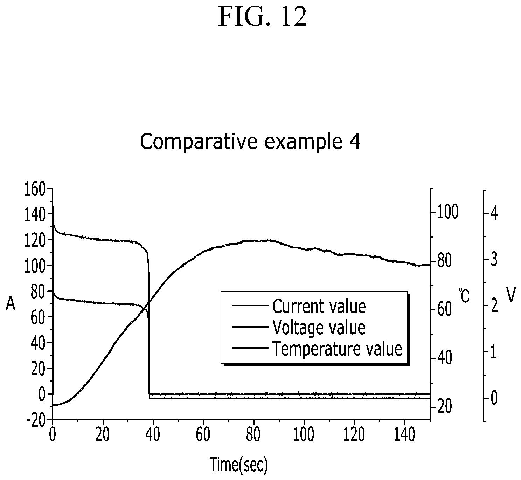

Referring to FIG. 9, FIG. 10, and Table 3, the current interrupt device is separated around 40 seconds (sec) in the case of the embodiments 3 and 4, and referring to FIG. 11, FIG. 12, and Table 3, the current interrupt device is separated around 40 seconds (sec) in the case of the comparative examples 3 and 4. The embodiments 3 and 4 and the comparative examples 3 and 4 have similar times when the current interrupt device is separated by the increase of internal pressure. Further, the maximum temperatures (Max. temp) of the cylindrical battery according to the embodiments 3 and 4 and the comparative examples 3 and 4 are measured to be similar to each other.

However, in the case of the comparative examples 3 and 4, when a current flow is measured after the separation of the current interrupt device (CID), resistance of 7.5mΩ and 4.9mΩ are respectively measured. This signifies that the electrical connection between the safety vent and the current interrupt device is not completely intercepted after the separation of the current interrupt device (CID) and a reconnection is generated. On the contrary, no reconnection is generated in the case of the embodiments 3 and 4.

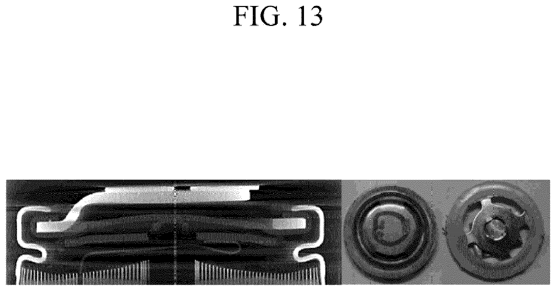

FIG. 13 to FIG. 16 sequentially show photographs of a CT image after a current interrupt device is separated, an upper cap, and a sealing gasket according to an embodiment 3, an embodiment 4, a comparative example 3, and a comparative example 4. The CT image shows an upper portion on which a cap assembly is positioned in the cylindrical battery.

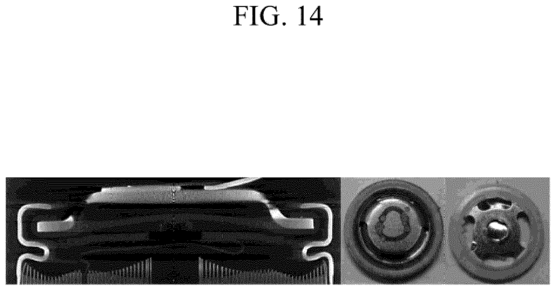

Referring to FIG. 13, FIG. 14, and Table 3, as described above, no reconnection is generated and no melting of the CID gasket or the sealing gasket is generated in the case of the embodiments 3 and 4.

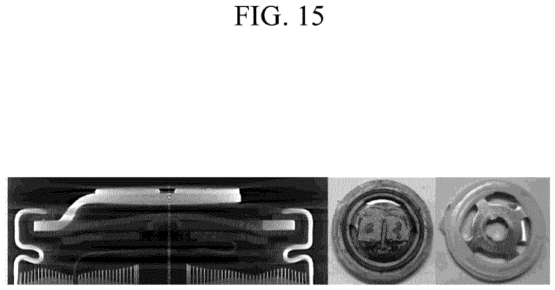

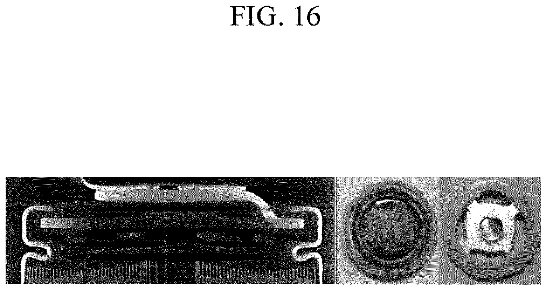

Referring to FIG. 15 and Table 3, in the case of the comparative example 3, the reconnection is generated and the CID gasket and the sealing gasket are melted. Referring to FIG. 16 and Table 3, in the case of the comparative example 4, the reconnection is generated and the sealing gasket is melted.

To sum up the experimental result, in the case of the embodiments 3 and 4 in which the glass fiber is added, heat resistance is improved and heat deflection is not generated, thereby effectively intercepting the reconnection between the safety vent and the current interrupt device. On the contrary, in the case of the comparative examples 3 and 4 in which the glass fiber is not added, the reconnection between the safety vent and the current interrupt device is not intercepted because of heat deflection or melting of the CID gasket caused by the increase of temperature.

### Estimation Example 4: external short-circuit estimation

The external short-circuit estimation is performed when the embodiments 5 and 6 are provided.

In detail, the embodiments 5 and 6 are provided by allowing different contents of glass fiber included in the CID gasket regarding the 18650 cylindrical battery. Further, 18650 cylindrical batteries are configured in 5 (in series) * 2 (in parallel) to form a battery pack and then perform an external short-circuit estimation.

In the case of the embodiment 5, the mass of the glass fiber vs. the mass of the CID gasket is manufactured to be 30%, and in the case of the embodiment 6, the mass of the glass fiber vs. the mass of the CID gasket is manufactured to be 20%.

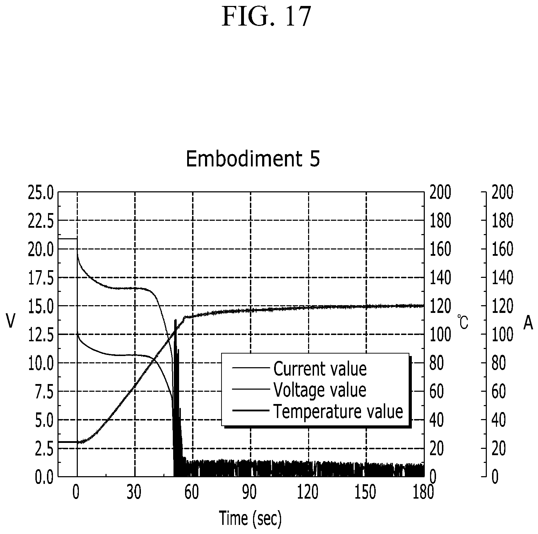

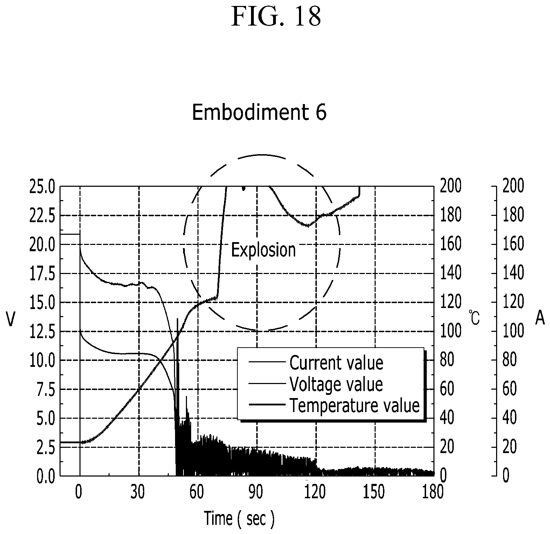

In the estimation example 4, external resistance of 80mΩ is applied to the battery packs including a plurality of cylindrical batteries according to the embodiments 5 and 6 to determine the conducts of the respective battery packs. Further, it is estimated whether a reconnection is generated after the separation of the current interrupt device (CID) in the external short-circuit estimation. Experimental results are shown in FIG. 17, FIG. 18, and Table 4. FIG. 17 and FIG. 18 show graphs on estimation results of external short-circuit according to an embodiment 5 and an embodiment 6. Table 4 is a summary of results of the graphs.

**(Table 4)**

| | Voltage (V) / Resistance (mΩ) | | CID separating time (sec) | Peak current (A) | Max. temp(°C) |
|---|---|---|---|---|---|
| | Before separation of CID | After separation of CID | | | |
| Embodiment 5 | 20.87 / 41.1 | 0/∞ | 50.6 | 159.2 | 120.1 |
| Embodiment 6 | 20.87 / 41.0 | Explosion | 49.4 | 159.0 | - |

Referring to FIG. 17, FIG. 18, and Table 4, in the case of the embodiment 5, the current interrupt device is separated at 50.6 seconds (sec), and no reconnection is generated after that. On the contrary, in the case of the embodiment 6, the current interrupt device is separated at 49.4 seconds (sec), and a reconnection is generated after that, which results in an explosion.

That is, the mass of the glass fiber vs. the mass of the CID gasket is less than 25% in the battery pack unit, and when a less amount of the reinforcement material is included, the CID gasket fails to endure the heat and the pressure inside the battery pack but is melted to generate a reconnection, and this may lead to a thermal runaway or an explosion of the battery pack.

In the present embodiment, terms representing directions such as before, after, right, left, top, and bottom have been used, but they are for ease of description, and are variable depending on a position of a target material or a position of an observer.

One or more secondary batteries according to the above-described present embodiment may be applied to various devices. In detail, these devices may be applied to a transportation apparatus such as an electric bicycle, an electric vehicle, a hybrid vehicle, and the like, but are not limited thereto, and may be applied to various devices that can use the secondary battery.

While this invention has been described in connection with what is presently considered to be practical embodiments, it is to be understood that the invention is not limited to the disclosed embodiments, but, on the contrary, is intended to cover various modifications and equivalent arrangements included within the spirit and scope of the appended claims.

### <Description of symbols>

100: secondary battery
200: cylindrical case
300: cap assembly
310: upper cap
320: safety vent
400: sealing gasket
500: electrode assembly
600: current interrupt device
700: CID gasket

## Claims

1. A secondary battery comprising:
a current interrupt device (CID);
a safety vent disposed on the current interrupt device and electrically connected to the current interrupt device; and
a CID gasket for surrounding an edge of the current interrupt device,
wherein the CID gasket includes reinforcement material, and
the reinforcement material includes at least one of glass fiber, carbon fiber, aramid fiber, cellulose, ceramic particles, and a filler.

2. The secondary battery of claim 1, wherein
the CID gasket includes a first portion for surrounding an edge of the current interrupt device and a second portion disposed on the first portion and extending in a center direction of the current interrupt device.

3. The secondary battery of claim 2, wherein
the second portion extends between the safety vent and the current interrupt device.

4. The secondary battery of claim 1, wherein
the CID gasket includes a polymer resin, and
the polymer resin includes at least one of polypropylene (PP), polyethylene terephthalate (PET), polybutylene terephthalate (PBT), and perfluoroalkoxy alkane (PFA).

5. The secondary battery of claim 1, wherein
the CID gasket includes a polymer resin, and
the polymer resin includes polybutylene terephthalate (PBT).

6. The secondary battery of claim 1, wherein
the current interrupt device includes an exterior circumference portion and an interrupter surrounded by the exterior circumference portion, and when an internal pressure of the secondary battery rises, the interrupter is separated from the exterior circumference portion.

7. The secondary battery of claim 6, wherein
the safety vent is electrically connected to the interrupter.

8. The secondary battery of claim 6, further comprising
an electrode assembly including a positive electrode, a negative electrode, and a separation membrane,
wherein the exterior circumference portion is electrically connected to the positive electrode through a positive electrode tab.

9. The secondary battery of claim 1, further comprising
an upper cap disposed on the safety vent and electrically connected to the safety vent.

10. The secondary battery of claim 1, further comprising
a cylindrical case.

11. A device including a secondary battery according to claim 1.
